Europäisches Patentamt

European Patent Office

Office européen des brevets

(19)

(11) Veröffentlichungsnummer: **0 126 425 B1**

(12) **EUROPÄISCHE PATENTSCHRIFT**

(45) Veröffentlichungstag der Patentschrift:
07.12.88

(51) Int. Cl.⁴: $B\ 01\ J\ 23/86$, $C\ 01\ B\ 3/16$

(21) Anmeldenummer: 84105564.3

(22) Anmeldetag: 17.05.84

(54) Eisenoxid-Chromoxid-Katalysator für die Hochtemparatur-CO-Konvertierung.

(30) Priorität: 18.05.83 DE 3318131

(43) Veröffentlichungstag der Anmeldung:
28.11.84 Patentblatt 84/48

(45) Bekanntmachung des Hinweises auf die Patenterteilung:
07.12.88 Patentblatt 88/49

(84) Benannte Vertragsstaaten:
AT BE DE FR GB IT NL

(56) Entgegenhaltungen:
NL-A- 16 146
US-A- 2 364 562
US-A- 2 567 140
US-A- 2 950 258
US-A- 3 577 354

(73) Patentinhaber: SÜD-CHEMIE AG, Lenbachplatz 6,
D-8000 München 2 (DE)

(72) .Erfinder: Schneider, Michael, Dr. Dipl.-Chem.,
Waldparkstrasse 54a, D-8012 Ottobrunn-Riemerling
(DE)
Erfinder: Kochloefl, Karl, Dr. Dipl.-Chem.,
Kreuzstrasse 2, D-8052 Moosburg (DE)
Erfinder: Pohl, Joachim, Dr. Dipl.-Ing., Küpflingstrasse 4,
D-8200 Rosenheim (DE)
Erfinder: Bock, Ortwin, Enzianstrasse 16a,
D-8300 Landshut (DE)

(74) Vertreter: Reitzner, Bruno, Dr. et al, Patentanwälte
Dipl.-Ing. R. Splanemann Dr. B. Reitzner Tal 13,
D-8000 München 2 (DE)

**Beschreibung**

Die Erfindung betrifft Eisenoxid-Chromoxid-Katalysatoren mit erhöhter mechanischer Festigkeit für die Hochtemperatur-CO-Konvertierung.

Die Wasserstoffherstellung aus Kohlenmonoxid und Wasserdampf zählt seit Jahrzehnten zu den wichtigsten Prozessen der chemischen Industrie. Wie allgemein bekannt, haben sich für die Hochtemperatur-CO-Konvertierung insbesondere Eisenoxid und Chromoxid enthaltende Katalysatoren bewährt. Üblicherweise werden diese in der technischen Praxis bei 350 bis 390 °C unter atmosphärischem Druck eingesetzt.

In der letzten Zeit werden jedoch häufig Anlagen gebaut, die aus wirtschaftlichen Gründen bei erhöhten Drucken, z.B. bis zu 25 bzw. 50 bar, arbeiten. Wie die Erfahrungen mit derartigen Anlagen zeigen, verlieren kommerzielle Eisenoxid-Chromoxid-Katalysatoren während der Laufzeit relativ schnell ihre ursprüngliche mechanische Festigkeit. Dieser Effekt hat oft die Bildung von Bruch bzw. Staub und gleichzeitig eine deutliche Erhöhung des Strömungswiderstandes zur Folge.

Unter mechanischer Festigkeit versteht man im allgemeinen die Seitendruckfestigkeit (SDF), die in an sich bekannter Weise an tablettenförmigen Katalysatoren gemessen wird. An kommerziellen Eisenoxid-Chromoxid-Katalysatoren wurden nach dem Einsatz in einer Hochtemperaturkonvertierungsanlage unter einem Druck von 50 bar nach einer Laufzeit von 2000 Stunden SDF-Verluste von etwa 54 bis 63% gefunden. Dies gilt auch für Katalysatoren mit ursprünglich hohen SDF-Werten.

Die die CO-Konvertierung unter technischen Bedingungen im Bereich der inneren Diffusion abläuft, sind sowohl die Porosität als auch die Porenverteilung in den Katalysator-Formkörpern (insbesondere Tabletten) von Bedeutung. Die Herstellung eines Katalysators mit erhöhter Seitendruckfestigkeit (15 kg/Tablette) der Formkörper bedingt die Anwendung von höheren Pressdrukken. Dieses Verfahren führt gleichzeitig zu einer Verringerung des Porenvolumens sowie zu einer Änderung der Porenverteilung in den hergestellten Tabletten und dadurch auch zu einer beträchtlichen Einbusse der scheinbaren Aktivität.

Eine andere Lösung des Festigkeitsproblems bietet sich in der Zugabe von verschiedenen Komponenten, die die Seitendruckfestigkeit der Eisenoxid-Chromoxid-Katalysatoren erhöhen bzw. ihren raschen Abfall verhindern können.

So ist z.B. aus der DE-B 12 52 184 bekannt, dass die Seitendruckfestigkeit von $Co-MoO_3-Al_2O_3$-Konvertierungskatalysatoren durch Zugabe von anorganischen Bindemitteln, wie Portlandzement, Tonerdezement oder Calciumaluminat erhöht werden kann, wodurch der Einsatz dieser Katalysatoren in Druckanlagen ermöglicht wird. Wendet man dieses Verfahren bei Eisenoxid-Chromoxid-Katalysatoren an, so erhält man zwar eine Erhöhung der Seitendruckfestigkeit; diese geht jedoch auf Kosten der scheinbaren Aktivitäten der Katalysator-Formkörper.

Ferner sind aus der DE-A 18 12 813 Eisenoxid-Chromoxid-Katalysatoren für die CO-Konvertierung bekannt, die als aktive Metalle Eisen, Chrom und Kobalt in Form der Oxide auf einem Aluminiumoxidträger enthalten, wobei das Kobaltoxid teilweise oder ganz durch Nickeloxid ersetzt sein kann. Diese Katalysatoren können ferner Aluminiumoxid oder ein Gemisch oder eine Verbindung aus Aluminiumoxid und Magnesiumoxid enthalten, wodurch eine grössere Lebensdauer und eine geringere Empfindlichkeit gegenüber Katalysatorgiften erzielt werden soll. Die Verwendung von Aluminiumoxid bringt aber, auch wenn es im Gemisch mit Magnesiumoxid verwendet wird, keine Verbesserung der mechanischen Festigkeit der Katalysatoren. Ausserdem sind diese Katalysatoren für eine Anwendung bei hohen Drucken nicht geeignet, da die Anwesenheit von Kobalt und/oder Nickel zu einer unerwünschten Methanisierung bzw. Fischer-Tropsch-Synthese führt.

Schliesslich sind aus der US-A-35 77 354 Katalysatoren bekannt, die (analytisch) Eisenoxid, Chromoxid und Magnesiumoxid enthalten. Bei dem Umsetzungsprodukt handelt es sich jedoch um Magnesium-Chrom-Ferrite mit Spinellstruktur, die kein freies Eisenoxid bzw. Chromoxid mehr enthalten. Derartige Katalysatoren zeigen nach einer längeren Betriebsdauer eine starke Abnahme der Seitendruckfestigkeit. Ferner nehmen die CO-Umsätze bei Erhöhung des MgO-Gehalts ab.

Der Erfindung liegt die Aufgabe zugrunde, Eisenoxid-Chromoxid-Katalysatoren der vorstehend definierten Gattung bereitzustellen, die sich durch eine hohe mechanische Festigkeit auszeichnen, welche auch beim Einsatz der Katalysatoren bei der CO-Konvertierung unter erhöhtem Druck nur wenig abnimmt, wobei auch die ursprüngliche Aktivität der Katalysatoren im wesentlichen beibehalten wird und die störende Methanisierung praktisch nicht auftritt.

Die der Erfindung zugrundeliegende Aufgabe wird dadurch gelöst, dass der Katalysator Nickel und/oder Kobalt in Mengen von höchstens 200 ppm (vorzugsweise 0 bis 100 ppm) und als weitere Komponente Magnesiumoxid in einer (analytisch bestimmten) Menge von 4 bis 6 Gew.-% enthält, das durch Umsetzung mit überschüssigem Eisenoxid und/oder Chromoxid mindestens teilweise in Magnesiumspinell ($MgFe_2O_4$, $MgCr_2O_4$) in Form von diskreten Teilchen mit einer Kristallitgrösse von 100 bis 180 Å umgewandelt ist. Die genannten Verbindungen und ihre Kristallitgrösse lassen sich durch Röntgenbeugungsanalyse bestimmen. Die durchschnittliche Kristallitgrösse von Magnesiumoxid beträgt üblicherweise 100 bis 120 Å und die der Spinelle üblicherweise 130 bis 180 Å.

Derartige Kristallitgrössen können z.B. dadurch erhalten werden, dass bei der Herstellung der Katalysatoren Magnesiumoxid (oder eine Vorstufe des Magnesiumoxids, wie Magnesiumcarbonat) verwendet wird, von dem mehr als etwa 70 Gew.-% eine Teilchengrösse im Bereich von etwa 5 bis 15 µm haben.

Die analytische Zusammensetzung der erfindungsgemässen Katalysatoren ist vorzugsweise wie folgt:

80 bis 90 Gew.-% Eisenoxide ($Fe^{+2}$ und/oder $Fe^{+3}$);

7 bis 11 Gew.-% $Cr_2O_3$.

Ein Teil des Magnesiumoxids liegt, wie vorstehend erwähnt, in Form der Magnesiumspinelle des Eisens und/oder Chroms vor, so dass der analytisch bestimmte Eisenoxid- bzw. Chromoxidgehalt höher ist als der Gehalt an den entsprechenden freien Oxiden bzw. den Eisen-Chrom-Mischoxiden. Der Gehalt an Magnesiumspinellen hängt von der Intensität der thermischen Behandlung, welcher der Katalysator ausgesetzt ist, ab.

Der erfindungsgemässe Katalysator ist vorzugsweise dadurch erhältlich, dass man der Eisenoxid-Chromoxid-Komponente oder einer beim Calcinieren in diese überführbaren Vorstufe Magnesiumoxid oder eine beim Calcinieren in Magnesiumoxid überführbare Vorstufe zusetzt und das Gemisch calciniert.

Eine Vorstufe der Eisenoxid-Chromoxid-Komponente ist z.B. ein Gemisch der Hydroxide und/oder der Oxidhydrate des Eisens und des Chroms, wobei das Eisen in zwei- und/oder dreiwertiger Form und das Chrom im allgemeinen in dreiwertiger Form vorliegt. Als Vorstufe des Magnesiumoxids kommen beispielsweise Magnesiumhydroxid, -carbonat, -acetat, -formiat und/oder -oxalat infrage.

Das Magnesiumoxid bzw. dessen Vorstufe kann einer wässrigen Suspension oder einer ausgefällten Masse der Eisenoxid-Chromoxid-Komponente oder deren Vorstufe zugesetzt werden, wobei das erhaltene Gemisch (im ersteren Fall nach Entfernung der wässrigen Phase) calciniert wird. Das Magnesiumoxid bzw. seine Vorstufe (z.B. Magnesiumhydroxid oder Magnesiumcarbonat) wird hierbei vorzugsweise einem Filterkuchen zugesetzt, der aus frisch gefälltem Eisenhydroxid-Chromhydroxid nach Entfernung der wässrigen Phase erhalten wurde. Die nachfolgende Verarbeitung des Mg-haltigen Filterkuchens schliesst üblicherweise noch folgende Schritte ein: Zugabe von Presshilfsmitteln (Tablettierhilfen), wie Graphit, Trocknen bei Temperaturen von etwa 150 bis 220 °C, Verformung zu Tabletten und Calcinieren. Während dieser thermischen Behandlung werden die Eisen- und Chromhydroxide einerseits in die entsprechenden Oxide, und Magnesiumhydroxid, Magnesiumcarbonat bzw. -hydroxycarbonat in Magnesiumoxid und teilweise durch Umsetzung mit dem Eisenoxid und dem Chromoxid in die entsprechenden Magnesiumspinelle ($MgFe_2O_4$ und $MgCr_2O_4$) umgewandelt.

Man kann aber auch den getrockneten Filterkuchen aus Eisen- und Chromhydroxid bzw. die entsprechenden Oxide mit wasserlöslichen und leicht thermisch zersetzbaren Magnesiumsalzen, wie Magnesiumacetat, -formiat oder -oxalat imprägnieren und das Gemisch thermisch behandeln, wobei sich wieder Magnesiumoxid bildet, das gegebenenfalls mit Eisenoxid und Chromoxid zu den entsprechenden Spinellen reagieren kann.

Nach einer weniger bevorzugten Ausführungsform, bei der kleinere Magnesiumoxid- bzw. Magnesiumspinell-Teilchen gebildet werden, kann der erfindungsgemässe Katalysator durch gemeinsame Fällung der Eisenoxid-Chromoxid-Komponente und der Magnesiumoxid-Komponente bzw. der Vorstufen dieser Komponenten aus den entsprechenden wasserlöslichen Metallsalzen mit Alkali und anschliessender Calcinierung der ausgefällten Masse erhalten werden. Als wasserlösliche Metallsalze kommen z.B. die Nitrate und Sulfate des Eisens, Chroms und Magnesiums infrage, die vorzugsweise mit Natriumcarbonat bzw. Natriumhydroxid ausgefällt werden.

Unabhängig davon, wie die Magnesiumkomponente auf die Eisenoxid-Chromoxid-Komponente aufgebracht wird, erfolgt die Calcinierung gewöhnlich bei etwa 450 bis 520 °C, vorzugsweise bei etwa 470 bis 490 °C.

Der erfindungsgemässe Katalysator wird vorzugsweise in Form von Formkörpern, wie Tabletten oder Ringen eingesetzt. Zu diesem Zweck werden die Eisenoxid-Chromoxid-Komponente und die Magnesiumoxid-Komponente bzw. deren Vorstufen vor der Calcinierung zu entsprechenden Formkörpern gepresst, wobei üblicherweise Graphit als Presshilfsmittel zugesetzt wird.

Gegenstand der Erfindung ist auch die Verwendung des erfindungsgemässen Katalysators zur CO-Konvertierung mit Wasserdampf bei Temperaturen von 300 bis 400 °C bei atmosphärischem oder erhöhtem Druck. Im letzteren Fall arbeitet man vorzugsweise bei Drucken im Bereich von etwa 10 bis 100 bar.

Die Erfindung ist durch die nachstehenden Beispiele erläutert. Die chemischen und physikalisch-chemischen Daten der so hergestellten Katalysatoren sind in der Tabelle angegeben. Aus der Tabelle ist die durch den Magnesiumoxidzusatz bedingte Abnahme des Verlustes der Seitendruckfestigkeit klar ersichtlich. Daneben wurde eine positive Wirkung auf die Thermoresistenz der Katalysatoren beobachtet. Dieser Effekt zeigt sich im allgemeinen in einer verminderten Abnahme der BET-Oberflächen der Katalysatoren.

Vergleichsbeispiel 1

Herstellung des Standardkatalysators ohne MgO

3200 ml deionisiertes Wasser wurden auf 50 bis 55 °C erwärmt und darin 1500 g $FeSO_4 \cdot 7H_2O$ gelöst; dann wurden 85,5 g $Na_2Cr_2O_7 \cdot 2H_2O$ zugegeben, und die Lösung wurde bis zur Fällung bei 55 °C gehalten.

3400 ml deionisiertes Wasser und 680 ml 50%ige NaOH (D = 1,525) wurden gemischt und auf 40 °C erwärmt. Dann wurde in die Natronlauge Luft eingeblasen (400 Liter/h) und unter Rühren innerhalb von 30 Minuten die Fe-Cr-Lösung zugegeben. Unter weiterem Rühren und Einleiten von Luft wurde die Suspension bis auf 60 °C aufgeheizt und 3 Stunden bei dieser Temperatur gehalten.

Der Niederschlag wurde über eine Nutsche filtriert, und der Filterkuchen wurde durch mehrmaliges Aufschlämmen mit je 4000 ml deionisiertem Wasser von 60 °C gewaschen, bis im Filtrat ein Widerstand von > 700 Ohm/cm erreicht wurde. Dabei wurden bei der letzten Aufschlämmung 21 g Naturgraphit zur Suspension gegeben. Der ausgewaschene Filterkuchen wurde bei 220°C 15 Stunden getrocknet. Das getrocknete Produkt wurde durch ein 1,5 mm-Sieb granuliert und zu zylindrischen Tabletten mit 6 mm Durchmesser und 6 mm Höhe verpresst. Die so erhaltenen Tabletten wurden bei 480°C eine Stunde calciniert.

Vergleichsbeispiel 2
Herstellung eines Katalysators mit Zement als Bindemittel

550 g des nach Beispiel 1 aus der Fällung erhaltenen Filterkuchens (Glühverlust bei 480°C = 55,5%) wurden im Kollergang 15 Minuten mit 13,1 g Portland-Zement vermischt. Dann wurde die erhaltene Masse 15 Stunden bei 220°C getrocknet und anschliessend, wie in Beispiel 1 angegeben, weiterverarbeitet.

Beispiel 1
Herstellung eines magnesiumoxidhaltigen Katalysators:

Unter Anwendung der Arbeitsweise von Vergleichsbeispiel 1 wurde mit 1500 g FeSO$_4 \cdot$ 7H$_2$O und 85,5 g Na$_2$Cr$_2$O$_7 \cdot$ 2H$_2$O eine Fällung durchgeführt. 550 g des erhaltenen Filterkuchens (Glühverlust bei 480°C = 55,6%) wurden im Kollergang 15 Minuten mit 19,6 g Mg(OH)$_2$ (MgO-Gehalt = 65,7%) vermischt. Das Gemisch wurde 15 Stunden bei 220°C getrocknet und, wie im Vergleichsbeispiel 1 beschrieben, weiterverarbeitet.

Beispiel 2 und Vergleichsbeispiel 3
Herstellung magnesiumoxidhaltiger Katalysatoren

Die Herstellung dieser Katalysatoren erfolgte wie nach Beispiel 1, wobei jedoch nach Beispiel 2 29,4 g Mg(OH)$_2$ und nach Vergleichsbeispiel 3 39,2 g Mg(OH)$_2$ zugemischt wurden.

Beispiel 3
Herstellung eines magnesiumoxidhaltigen Katalysators

Die Herstellung dieses Katalysators erfolgte analog dem Beispiel 1, nur wurden anstatt Mg(OH)$_2$ 30,7 g MgCO$_3$ (MgO-Gehalt = 42,0 Gew.-%) zugemischt.

Beispiel 4
Herstellung eines magnesiumoxidhaltigen Katalysators

Die Herstellung dieses Katalysators erfolgte analog dem Beispiel 1, wobei zu dem ausgewaschenen und in deionisiertem Wasser aufgeschlämmten Filterkuchen (entspricht 244,2 g wasserfreier Substanz) 30,7 g MgCO$_3$ (MgO-Gehalt = 42,0 Gew.-%) zugegeben wurden. Die weitere Verarbeitung erfolgte wie nach Vergleichsbeispiel 1.

Vergleichsbeispiel 4
Herstellung eines magnesiumoxidhaltigen Katalysators

Die Herstellung dieses Katalysators erfolgte analog Beispiel 4, wobei jedoch 46,1 g MgCO$_3$ zugemischt wurden.

Beispiel 5
Herstellung eines magnesiumoxidhaltigen Katalysators durch gemeinsame Fällung der Komponenten

3200 ml deionisiertes Wasser wurden auf 50 bis 55°C erwärmt und darin 1500 g FeSO$_4 \cdot$ 7H$_2$O und 152,7 g MgSO$_4 \cdot$ 7H$_2$O gelöst. Dann wurden 85,5 g Na$_2$Cr$_2$O$_7 \cdot$ 2H$_2$O zugegeben, und die Lösung wurde bis zur Fällung bei 55°C gehalten.

3400 ml deionisiertes Wasser und 745 ml 50%ige NaOH (D = 1,525) wurden gemischt und auf 40°C erwärmt.

Die Fällung und anschliessende Weiterverarbeitung erfolgte analog dem Vergleichsbeispiel 1.

Beispiel 6
Herstellung eines magnesiumoxidhaltigen Katalysators

Die Fällung und die Gewinnung des Filterkuchens erfolgte analog Beispiel 3.

550 g des erhaltenen Filterkuchens (Glühverlust bei 480°C = 55,6%) wurden mit 46 g Mg(CH$_3$COO)$_2$, gelöst in 150 ml deionisiertem Wasser, imprägniert, und die erhaltene Masse wurde 15 Stunden bei 220°C getrocknet und anschliessend, wie im Vergleichsbeispiel 1 angegeben, weiterverarbeitet.

Chemische und physikalisch-katalytische Daten der hergestellten Katalysatoren

| Katalysator (Tabletten 6 × 6 mm) | Zusätze (Gew. %) | MgO-Gehalt[1] | Herstellungs-methode[2] | BET-Ober-fläche[3] (m$^2$/g) | | SDF[4] (kg) | | Verlust der SDF (%) | CO-Umsatz[5] (%) |
|---|---|---|---|---|---|---|---|---|---|
| | | | | f | g | f | g | | |
| Vergl. B. 1 | – | – | S | 80 | 40 | 13.8 | 8.4 | 39.0 | 78.0 |
| " 2 | Zement (5.0) | – | A | 73 | 48 | 16.2 | 11.6 | 28.4 | 65.8 |
| Beispiel 1 | Mg(OH)$_2$ | 5.0 | A | 78 | 50 | 12.0 | 11.0 | 8.3 | 70.1 |
| " 2 | Mg(OH)$_2$ | 7.5 | A | 82 | 44 | 12.0 | 10.7 | 10.8 | 61.2 |
| Vergl. B. 3 | Mg(OH)$_2$ | 10.0 | A | 93 | 44 | 12.4 | 9.9 | 20.2 | 61.7 |
| Beispiel 3 | MgCO$_3$ | 5.0 | A | 48 | 43 | 13.2 | 11.3 | 15.2 | 66.2 |
| " 4 | MgCO$_3$ | 5.0 | B | 46 | 43 | 13.9 | 11.0 | 21.0 | 67.9 |
| Vergl. B. 4 | MgCO$_3$ | 7.5 | B | 47 | 38 | 15.0 | 10.9 | 27.4 | 63.2 |
| Beispiel 5 | MgSO$_4$ | 5.0 | C | 78 | 50 | 11.2 | 8.3 | 26.0 | 77.2 |
| " 6 | Mg(OOCCH$_3$)$_2$ | 5.0 | D | 47 | 40 | 10.5 | 9.3 | 11.4 | 61.9 |

Erläuterung zur Tabelle:

1. MgO-Gehalt im fertigen Katalysator

2. Herstellungsmethode: S = Standard, A = Zumischen der Magnesiumverbindung zum Filterkuchen, B = Zumischen der Magnesiumverbindung zur wässrigen Suspension der gefällten Fe- und Cr-Hydroxide, C = gemeinsame Fällung, D = Imprägnierung des getrockneten Filterkuchens mit Magnesiumacetat.

3. Es wurde die BET-Oberfläche des frischen (f) und des gebrauchten (g) Katalysators nach dem Test bestimmt.

4. Es wurde die Seitendruckfestigkeit (SDF) des frischen (f) und des gebrauchten (g) Katalysators nach dem Test bestimmt, und zwar mit 6 × 6-mm-Tabletten. Der Verlust der Seitendruckfestigkeit wurde nach der Durchführung des Aktivitätstests (Laufzeit 8 Stunden) bestimmt. Dazu wurden die Katalysatortabletten aus dem Prüfreaktor unter Stickstoff ausgebaut und mit einem kommerziellen Härteprüfgerät gemessen.

5. Der CO-Umsatz wurde unter folgenden Reaktionsbedingungen bestimmt: T = 370 °C, P = 50 bar, Verhältnis $H_2O$/Gas = 1,0; Gaszusammensetzung (%): CO = 49,6, $CO_2$ = 4,7, $H_2$ = 45,7; Raumgeschwindigkeit (HSV) = 3000 Vol. Gas je Vol. Katalysator und Stunde; thermodynamisch möglicher Umsatz = 94,2%.

**Patentansprüche**

1. Eisenoxid-Chromoxid-Katalysator mit erhöhter mechanischer Festigkeit, für die Hochtemperatur-CO-Konvertierung, dadurch gekennzeichnet, dass er Nickel und/oder Kobalt in Mengen von höchstens 200 ppm und als weitere Komponente Magnesiumoxid in einer (analytisch bestimmten) Menge von 4 bis 6 Gew.-% enthält, das durch Umsetzung mit überschüssigem Eisenoxid und/oder Chromoxid mindestens teilweise in Magnesiumspinell in Form von diskreten Teilchen mit einer Kristallitgrösse von 100 bis 180 Å umgewandelt ist.

2. Katalysator nach Anspruch 1, gekennzeichnet durch die analytische Zusammensetzung:
80 bis 90 Gew.-% eisenoxide ($Fe^{+2}$ und/oder $Fe^{+3}$);
7 bis 11 Gew.-% $Cr_2O_3$;
4 bis 6 Gew.-% MgO.

3. Katalysator nach Anspruch 1 oder 2, dadurch erhältlich, dass man der Eisenoxid-Chromoxid-Komponente oder einer beim Calcinieren in diese überführbare Vorstufe Magnesiumoxid oder eine beim Calcinieren in Magnesiumoxid überführbare Vorstufe zusetzt und das Gemisch calciniert.

4. Katalysator nach Anspruch 3, dadurch erhältlich, dass man als Vorstufe der Eisenoxid-Chromoxid-Komponente ein Gemisch der Hydroxide und/oder Oxidhydrate des Eisens und des Chroms und als Vorstufe des Magnesiumoxids Magnesiumhydroxid, -carbonat, -acetat, -formiat und/oder -oxalat verwendet.

5. Katalysator nach einem der Ansprüche 1 bis 4, dadurch erhältlich, dass man das Magnesiumoxid bzw. dessen Vorstufe einer wässrigen Suspension oder der ausgefällten Masse der Eisenoxid-Chromoxid-Komponente oder deren Vorstufe zusetzt und das erhaltene Gemisch calciniert.

6. Katalysator nach Anspruch 1 oder 2, erhältlich durch gemeinsame Fällung der Eisenoxid-Chromoxid-Komponente und der Magnesiumoxid-Komponente bzw. der Vorstufen dieser Komponenten, aus den entsprechenden wasserlöslichen Metallsalzen mit Alkali und anschliessende Calcinierung der ausgefällten Masse.

7. Katalysator nach Anspruch 6, dadurch erhältlich, dass man als wasserlösliche Metallsalze die Nitrate oder Sulfate und als Alkali Natriumhydroxid oder Natriumcarbonat verwendet.

8. Katalysator nach einem der Ansprüche 1 bis 7, dadurch erhältlich, dass man die Calcinierung bei 450 bis 520 °C, vorzugsweise bei 470 bis 490 °C durchführt.

9. Katalysator nach einem der Ansprüche 1 bis 8, dadurch erhältlich, dass man die Eisenoxid-Chromoxid-Komponente und die Magnesiumoxid-Komponente bzw. deren Vorstufen vor der Calcinierung zu Formkörpern presst.

10. Katalysator nach einem der Ansprüche 1 bis 9, gekennzeichnet durch einen Gehalt an Graphit als Presshilfsmittel.

11. Verwendung des Katalysators nach einem der Ansprüche 1 bis 10 zur CO-Konvertierung mit Wasserdampf bei Temperaturen von 300 bis 400 °C unter atmosphärischem oder erhöhtem Druck.

12. Verwendung nach Anspruch 11, dadurch gekennzeichnet, dass Drucke im Bereich von 10 bis 100 bar angewendet werden.

**Claims**

1. An iron oxide-chromium oxide catalyst with increased mechanical strength, for high temperature CO conversion, characterised in that it contains nickel and/or cobalt in quantities of at most 200 ppm and, as an additional component, magnesium oxide in an (analytically determined) quantity of from 4 to 6% by weight, which by reaction with excess iron oxide and/or chromium oxide is converted at least partly into magnesium spinel in the form of discrete particles with a crystallite dimension of from 100 to 180 Å.

2. A catalyst according to Claim 1, characterised by the analytical composition:
80 to 90% by weight of iron oxide ($Fe^{2+}$ and/or $Fe^{3+}$);
7 to 11% by weight of $Cr_2O_3$;
4 to 6% by weight of MgO.

3. A catalyst according to Claim 1 or 2, which is obtained by adding magnesium oxide, or a precursor which can be converted into magnesium oxide, to the iron oxide-chromium oxide component, or to a precursor which can be converted into this component during calcination, and by calcining the mixture.

4. A catalyst according to Claim 3, which is obtained by using a mixture of hydroxides and/or hydrated oxides of iron and chromium as a precursor of the iron oxide-chromium oxide component and magnesium hydroxide, carbonate, acetate, formate and/or oxalate as a precursor of magnesium oxide.

5. A catalyst according to any one of Claims 1 to 4, which is obtained by adding the magnesium oxide or its precursor to an aqueous suspension or the precipitate of the iron oxide-chromium oxide component or its precursor and by calcining the mixture obtained.

6. A catalyst according to Claim 1 or 2, which is obtained by common precipitation of the iron oxide-chromium oxide component and of the magnesium oxide component or precursors of these components, from the corresponding watersoluble metal salts with alkali, and subsequent calcination of the precipitate.

7. A catalyst according to Claim 6, which is obtained by using nitrates or sulphates as watersoluble metal salts and sodium hydroxide or sodium carbonate as alkali.

8. A catalyst according to any one of Claims 1 to 7, which is obtained by carrying out the calcination at 450 to 520 °C, preferably at 470 to 490 °C.

9. A catalyst according to any one of Claims 1 to 8, which is obtained in that, prior to calcination, the iron oxide-chromium oxide component and magnesium oxide component or their precursors are compressed to form moulded bodies.

10. A catalyst according to any one of Claims 1 to 9, characterised by containing graphite as auxiliary moulding agent.

11. Use of the catalyst according to any of Claims 1 to 10 for CO conversion with steam at temperatures of from 300 to 400 °C at atmospheric or raised pressure.

12. Use according to Claim 11, characterised in that pressures within the range of from 10 to 100 bar are used.

## Revendications

1. Catalyseur à base d'oxyde de fer et d'oxyde de chrome, présentant une résistance mécanique élevée, pour la conversion de CO à haute température, caractérisé par le fait qu'il contient du nickel et/ou du cobalt en quantités d'au plus 200 ppm, et, comme autre composant, de l'oxyde de magnésium en une quantité (définie analytiquement) de 4 à 6% en poids, qui est transformé par réaction avec de l'oxyde de fer et/ou de l'oxyde de chrome en excès, au moins en partie, en spinelle de magnésium sous forme de particules discrètes présentant une dimension de cristallite de 100 à 180 Å.

2. Catalyseur selon la revendication 1, caractérisé par la composition analytique:

80 à 90% en poids d'oxydes de fer ($Fe^{2+}$ et/ou $Fe^{3+}$);
7 à 11% en poids de $Cr_2O_3$;
4 à 6% en poids de $MgO$.

3. Catalyseur selon la revendication 1 ou 2, que l'on peut obtenir en ajoutant le composant oxyde de fer – oxyde de chrome, ou un précurseur qui peut être transformé en ce composant par calcination, de l'oxyde de magnésium ou un précurseur qui peut être transformé en oxyde de magnésium par calcination, et en calcinant le mélange.

4. Catalyseur selon la revendication 3, que l'on peut obtenir en utilisant, comme précurseur du composant oxyde de fer – oxyde de chrome, un mélange des hydroxydes et/ou d'hydrates d'oxydes de fer et de chrome, et, comme précurseur de l'oxyde de magnésium, l'hydroxyde, le carbonate, l'acétate, le formiate et/ou l'oxalate de magnésium.

5. Catalyseur selon l'une des revendications 1 à 4, que l'on peut obtenir en ajoutant l'oxyde de magnésium, ou son précurseur, à une suspension aqueuse ou à la masse précipitée du composant oxyde de fer – oxyde de chrome, ou de son précurseur, et en calcinant le mélange obtenu.

6. Catalyseur selon la revendication 1 ou 2, que l'on peut obtenir par précipitation commune du composant oxyde de fer – oxyde de chrome et du composant oxyde de magnésium, ou les précurseurs de ces composants, à partir des sels métalliques solubles dans l'eau correspondants, avec des alcalis, et calcination ultérieure de la masse précipitée.

7. Catalyseur selon la revendication 6, que l'on peut obtenir en utilisant, comme sels métalliques solubles dans l'eau, les nitrates ou les sulfates, et, comme alcalis, l'hydroxyde de sodium ou le carbonate de sodium.

8. Catalyseur selon l'une des revendications 1 à 7, que l'on peut obtenir en effectuant la calcination à une température de 450 à 520 °C, de préférence, à une température de 470 à 490 °C.

9. Catalyseur selon l'une des revendications 1 à 8, que l'on peut obtenir en comprimant suivant des corps façonnés, le composant oxyde de fer – oxyde de chrome et le composant oxyde de magnésium, ou leurs précurseurs, avant la calcination.

10. Catalyseur selon l'une des revendications 1 à 9, caractérisé par une teneur en graphite, en tant qu'adjuvant de compression.

11. Utilisation du catalyseur tel que défini à l'une des revendications 1 à 10 pour la conversion de CO par de la vapeur d'eau, à des températures allant de 300 à 400 °C, à la pression atmosphérique ou sous pression élevée.

12. Utilisation selon la revendication 11, caractérisée par le fait qu'on utilise des pressions se situant dans la plage de 10 à 100 bars.